(19) Europäisches Patentamt

European Patent Office

Office européen des brevets

(11) **EP 1 721 911 A1**

(12) **EUROPEAN PATENT APPLICATION**
published in accordance with Art. 158(3) EPC

(43) Date of publication:
**15.11.2006 Bulletin 2006/46**

(51) Int Cl.:
*C08F 2/08* (2006.01)  *C08J 3/12* (2006.01)

(21) Application number: **05719762.6**

(22) Date of filing: **02.03.2005**

(86) International application number:
**PCT/JP2005/003447**

(87) International publication number:
**WO 2005/085296 (15.09.2005 Gazette 2005/37)**

(84) Designated Contracting States:
**DE FR GB IT**

(30) Priority: **03.03.2004 JP 2004059358**

(71) Applicant: **Nisshinbo Industries, Inc.**
**Chuo-ku,**
**Tokyo 103-8650 (JP)**

(72) Inventors:
• **HASHIBA, Toshifumi,**
**c/o R & D Center**
**Chiba-shi,**
**Chiba 2670056 (JP)**

• **HAYAKAWA, Kazutoshi,**
**c/o R & D Center**
**Chiba-shi,**
**Chiba 2670056 (JP)**
• **FUJII, Chihiro,**
**c/o R & D Center**
**Chiba-shi,**
**Chiba 2670056 (JP)**

(74) Representative: **Stuart, Ian Alexander et al**
**Mewburn Ellis LLP**
**York House**
**23 Kingsway**
**London WC2B 6HP (GB)**

(54) **OVAL-SPHERICAL ORGANIC POLYMER PARTICLE AND PROCESS FOR PRODUCING THE SAME**

(57)    Oval-spherical organic polymer panicles having ionic functional groups, which have each one continuous curved surface whose aspect ratio calculated by the formula: aspect ratio $(P_1)$ = major axis $(L_1)$/minor axis $(D_1)$, wherein the major axis $(L_1)$ and minor axis $(D_1)$ are those of a projection two-dimensional drawing obtained by light irradiation in the direction orthogonal to the direction of major axis of the panicle, satisfies the relationship $(P_1)$ $\geq$ 1.8. The obtained particles excel in optical properties, such as light scattering and light focusing, and frictional properties, such as sliding characteristic.

**FIG.1**

EP 1 721 911 A1

**Description**

TECHNICAL FIELD

The present invention relates to oval-spherical organic polymer particles and a process for producing such particles.

BACKGROUND ART

Micron-size high aspect-ratio particles are used as fillers and test substances in a variety of fields, including electrical and electronic materials, optical materials, building materials, biological and pharmaceutical materials, and cosmetics.
Most commonly used high aspect-ratio particles are composed of inorganic materials such as metal oxides.
Because such inorganic materials have a high specific gravity compared with organic substances, in some applications, including films and other shaped articles, they can be difficult to uniformly disperse and tend to be incompatible with resins, which sometimes has undesirable consequences in shaped articles and the performances thereof.
However, recent work on resin particles has led to the development of resin particles which, unlike the particles of indefinite or spherical shape obtained by conventional particle forming techniques such as grinding and solution polymerization, have discoidal, flattened or other distinctive shapes (e.g., Patent Document 1: JP-B 6-53805; Patent Document 2: JP-A 5-317688; Patent Document 3: JP-A 2000-38455).
Because these particles have a number of characteristics, including opacifying properties, whiteness and light diffusing properties, which are superior to those of conventional spherical particles, they are being used in a variety of fields, such as electrostatic developers (Patent Document 4: JP-A 8-202074), paper coatings such as for recording paper (Patent Document 5: JP-A 2-14222), adhesives (Patent Document 6: JP-B 2865534), and light diffusing sheets (Patent Document 7: JP-A 2000-39506).
At the same time, although such particles are all plate-like, compared with platy particles made of inorganic compounds such as talc or mica, considerable improvement remains to be made in terms of such characteristics as slip, light collecting properties and light diffusing properties.
Recently, to enhance these characteristics, resin particles with a distinctive shape composed of two curved surfaces formed with reference to a boundary line have recently been described (Patent Document 8: International Application WO 01/070826). Improvements in, for example, slip, light collecting properties and light diffusion properties have been investigated using these resin particles.
These characteristics are strongly influenced by the size and aspect ratio of the particles. Yet, it is difficult to produce micron-size particles having a high aspect ratio by the method of Patent Document 8. Further improvements are thus being sought with respect to both the particle size and shape.
Organic particles having a high aspect ratio can also be produced by mechanical methods which involve various operations, such as melting, spinning and cutting. However, with these methods, it is technically difficult to achieve a micron-scale particle size, in addition to which mass production is time and labor intensive. Moreover, such mechanical methods do not lend themselves easily to the production, free of fracture planes, of high-precision oval-spherical particles which are thick in the middle and become progressively more slender toward either pole.
Hence, no high aspect-ratio, micron-size, oval-spherical organic particles endowed with a smooth, spherical surface have previously been known to be capable of exhibiting a broad range of improved properties, including optical properties such as light scattering and light collecting properties, friction properties such as slip, material strength properties such as adhesion, cohesion and the impact and tensile strengths of shaped articles, cleanability while retaining developer chargeability, coating flatting properties, and opacifying properties.
Patent Document 1: JP-B 6-53805
Patent Document 2: JP-A 5-317688
Patent Document 3: JP-A 2000-38455
Patent Document 4: JP-A 8-202074
Patent Document 5: JP-A 2-14222
Patent Document 6: JP-B 2865534
Patent Document 7: JP-A 2000-39506
Patent Document 8: International Application WO 01/070826

## DISCLOSURE OF THE INVENTION

### Problems to be Solved by the Invention

It is therefore an object of the invention to provide oval-spherical organic polymer particles which have a high aspect ratio, improved optical characteristics such as light scattering properties and light collecting properties, and improved friction properties such as slip. A further object of the invention is provide a method of producing such particles.

### Means for Solving the Problems

We have conducted extensive investigations to attain the above object. As a result, we have discovered that, in an oval-spherical organic polymer particle which has a single continuous curved surface and onto which ionic functional groups have been introduced, by having the aspect ratio $P_1$ calculated from the major axis $L_1$ and minor axis $D_1$ of a projected two-dimensional image obtained by shining light onto the particle from a direction orthogonal to the long axis of the particle be 1.8 or more, it is possible to improve, for example, optical characteristics such as light scattering properties and light collecting properties. We have also found that such oval-spherical organic polymer particles can be easily and efficiently produced chemically by solution polymerization, and preferably dispersion polymerization.

Accordingly, the present invention provides the following oval-spherical organic polymer particles and methods of producing the same.

[1] An oval-spherical organic polymer particle having a single continuous curved surface, which particle is characterized by bearing an ionic functional group and having an aspect ratio $P_1$, calculated by the formula $P_1 = L_1/D_1$, wherein $L_1$ is the major axis and $D_1$ is the minor axis of a projected two-dimensional image obtained by shining light onto the particle from a direction orthogonal to the long axis of the particle, that satisfies the relationship $P_1 \geq 1.8$.

[2] The oval-spherical organic polymer particle of [1] which is characterized in that the major axis $L_1$ is from 0.001 to 10,000 $\mu$m.

[3] The oval-spherical organic polymer particle of [1] or [2] which is characterized in that the ionic functional group is an anionic functional group.

[4] The oval-spherical organic polymer particle of [1] or [2] which is characterized in that the ionic functional group is a salt having a counterion.

[5] The oval-spherical organic polymer particle of [3] which is characterized in that the anionic functional group has a metal cation as a counterion.

[6] A method of producing the oval-spherical organic polymer particle of [1] or [2], the method being characterized by solution polymerizing a first organic monomer having an ionic functional group and a polymerizable group with a second organic monomer that is polymerizable the first organic monomer.

[7] The oval-spherical organic polymer particle producing method of [6] which is characterized by using a solution having a content of the first and second organic monomers combined of 1 to 80 wt%.

[8] The oval-spherical organic polymer particle producing method of [6] or [7] which is characterized by carrying out dispersion polymerization in a solution that also contains a dispersant.

### Advantageous Effects of the Invention

The oval-spherical organic polymer particle of the invention, by being endowed with a single continuous curved surface and a high aspect ratio of 1.8 or more, has a high light diffusing ability and moreover can diffuse light in a highly light-transmitting state.

Also, because it is composed largely of organic components, use of the inventive particle as a resin additive enables the refractive index of the resin to be easily modified.

Given that the inventive particle is an organic polymer particle and thus has a low specific gravity compared with inorganic particles, when used as a resin additive, it readily disperses in the resin to which it is added and has an excellent affinity with the resin, enabling the mechanical properties (e.g., strength) of films and other resin shaped articles obtained therefrom to be improved.

In addition, because the inventive particle is composed largely of organic components, an inorganic or organic coating treatment can easily be administered to the surface of the particle, thus enabling the production of functional capsules. Moreover, because the inventive particles have ionic functional groups, by modifying these functional groups, it is possible to produce multifunctional particles.

Also, inasmuch as the inventive particle is composed largely of organic components, coloration using pigments or dyes, for example, can easily be carried out, enabling use of the particle in colored material applications such as coatings and toner materials.

Such high-aspect-ratio oval-spherical organic polymer particles, when subjected to treatment such as plating or vacuum discharge deposition, can be employed in new applications as electrically conductive particles for use in conductive materials, such as fillers for electromagnetic shielding, electrically conductive fillers which impart conductivity to plastic materials, and other conductive materials such as for connecting the electrodes of a liquid-crystal display panel with a driving LSI chip, for connecting LSI chips to circuit boards, and for connecting between other very small-pitch electrode terminals.

Because the oval-spherical organic polymer particle of the invention has a high aspect ratio and can easily be prepared to a micron size, it can be employed as a fillers and test substances in a variety of fields, including electrical and electronic materials, optical materials, building materials, biological and pharmaceutical materials, and cosmetics.

BRIEF DESCRIPTION OF THE DIAGRAMS

FIG. 1 is a scanning electron micrograph of oval-spherical organic polymer particles obtained in Example 1.
FIG. 2 is a scanning electron micrograph of oval-spherical organic polymer particles obtained in Example 3.
FIG. 3 is a scanning electron micrograph of oval-spherical organic polymer particles obtained in Example 4.
FIG. 4 is a scanning electron micrograph of oval-spherical organic polymer particles obtained in Example 5.

BEST MODE FOR CARRYING OUT THE INVENTION

The invention is described more fully below.

The oval-spherical organic polymer particle of the invention is an oval-spherical organic polymer particle which has a single continuous curved surface and is characterized by bearing an ionic functional group and having an aspect ratio $P_1$, calculated by the formula $P_1 = L_1/D_1$, wherein $L_1$ is the major axis and $D_1$ is the minor axis of a projected two-dimensional image obtained by shining light onto the particle from a direction orthogonal to the long axis of the particle, that satisfies the relationship $P_1 \geq 1.8$.

"A single continuous curved surface" refers herein to a smooth curved surface which is free of boundary lines and breaks.

In the practice of the invention, the aspect ratio $P_1$ in a projected two-dimensional image obtained by shining light onto the particle from a direction orthogonal to the long axis of the particle is $\geq 1.8$. However, for good light diffusing properties and good retention of the shape of the oval-spherical organic polymer particle (i.e., hardness) when rendered into a composition, it is preferable for $2.0 \leq P_1 \leq 20$, more preferable for $2.2 \leq P_1 \leq 15$, and most preferable for $2.5 \leq P_1 \leq 10$. Moreover, it is preferable for the shape of the oval-spherical organic polymer particle as seen from the long axis direction of the particle (which shape is synonymous with the shape of the projected two-dimensional image obtained by shining light onto the particle from the long axis direction) to be substantially circular or elliptical with a major axis to minor axis ratio close to 1.

The major axis $L_1$ of the projected two-dimensional image obtained by shining light onto the oval-spherical organic polymer particle of the invention from a direction orthogonal to the long axis of the particle is from 0.001 to 10,000 $\mu m$, preferably from 0.05 to 10,000 $\mu m$, more preferably from 0.1 to 1,000 $\mu m$, even more preferably from 0.5 to 500 $\mu m$, and most preferably from 1 to 200 $\mu m$. Particles with a major axis $L_1$ of more than 10,000 $\mu m$ can be produced, but there is little point in doing so as such dimensions are in a range where production by mechanical methods involving the use of operations such as spinning is possible. At a major axis $L_1$ of less than 0.001 $\mu m$, the particle has a diameter so small as to be prone to agglomeration with other particles, making it very likely that monodispersed particles cannot be obtained.

The ionic functional groups on the organic polymer particle may be anionic functional groups or cationic functional groups. Examples of anionic functional groups include carboxyl groups, sulfonic acid groups, phosphoric acid groups, phenolic hydroxyl groups, and salts thereof. Examples of cationic functional groups include amino groups, imidazole groups, pyridine groups, amidino groups, and salts thereof.

Anionic functional groups are especially preferred on account of the many general-purpose products and wealth of types, and also because they make it possible to efficiently control the size, shape and other properties of oval particles. Of these, the use of one or more type of functional group selected from among carboxyl groups, sulfonic acid groups, phosphoric acid groups and derivatives thereof are particularly preferable because they are easy to introduce onto molecules and have an excellent stability and safety.

Examples of compounds capable of serving as counterions to such ionic functional groups include, for anionic functional groups, metal cations, ammonium cations, pyridinium cations and phosphonium cations; and for cationic functional groups, the ions of halides such as chlorides, bromides and iodides.

When an anionic functional group is used, for reasons having to do with production costs, the wealth of types, and the ability to efficiently control such characteristics of oval particles as their precision, size and shape, it is most preferable for the counterion to be a metal cation.

Illustrative examples of metal cations include non-transition metal cations such as alkali metal cations (e.g., lithium, sodium, rubidium, cesium), alkaline earth metal cations (e.g., magnesium, calcium, strontium, barium), and aluminum; and transition metal-containing cations, including the oxides, hydroxides and carbonates of transition metals such as zinc, copper, manganese, nickel, cobalt, iron and chromium.

The method of introducing the ionic functional groups is not subject to any particular limitation. Illustrative examples include methods which involves the subsequent modification of a resin prepared from a nonionic monomer as the starting material, and a method which involves the polymerization of an ionic functional group-bearing monomer as the starting material. The latter approach is preferable from the standpoint of the reliability and ease of introducing the ionic functional groups, lowering the production costs, and reliably obtaining oval-spherical organic polymer particles having a high aspect ratio.

No particular limitation is placed on the molecular weight of the polymer making up the particle, although the weight-average molecular weight, as measured by gel permeation chromatography, is generally about 1,000 to 3,000,000.

Oval-spherical organic polymer particles such as the above may be produced by solution polymerizing a first organic monomer having an ionic functional group and a polymerizable group with a second organic monomer which is polymerizable with the first organic monomer. Here, if a monomer lacking an ionic functional group is used, the resulting particles will tend to be spherical, making it highly unlikely that oval-spherical particles having an aspect ratio like that described above can be obtained. The reason, while not entirely clear, appears to be connected to the change in surface tension that takes place during particle formation when an ionic functional group is present on the monomer.

Illustrative examples of solution polymerization include (1) emulsion or suspension polymerization carried out in an aqueous solution, (2) dispersion polymerization carried out in the presence of a dispersant, either within a non-aqueous organic solvent or a mixed solvent of water and a non-aqueous organic solvent, and (3) a combination of above method (1) or (2) with seed polymerization. Of these, the use of dispersion polymerization is preferred because the particle diameter is easy to control and subsequent treatment such as washing is easy.

The first organic monomer having an ionic functional group may be an anionic functional group-bearing monomer or a cationic functional group-bearing monomer. The polymerizable group is not subject to any particular limitation, provided it is a polymerizable functional group. Suitable examples include reactive functional groups such as carbon-carbon unsaturated bonds, hydroxyl groups, amino groups, epoxy groups, thiol groups, isocyanate groups, oxazoline groups and carbodiimide groups.

Exemplary first organic monomers having an anionic functional group include monocarboxylic acid monomers, dicarboxylic acid monomers, sulfonic acid monomers, sulfuric acid ester monomers, phenolic hydroxyl group-bearing monomers and phosphoric acid monomers.

Illustrative examples of monocarboxylic acid monomers include (meth)acrylic acid, crotonic acid, cinnamic acid, mono-$C_{1-8}$ alkyl esters of maleic acid, mono-$C_{1-8}$ alkyl esters of itaconic acid, vinylbenzoic acid, and salts thereof.

Examples of dicarboxylic acid monomers include maleic acid and its anhydride, $\alpha$-methylmaleic acid and its anhydride, $\alpha$-phenylmaleic acid and its anhydride, fumaric acid, itaconic acid, and salts thereof.

Examples of sulfonic acid monomers include alkenesulfonic acids such as ethylenesulfonic acid, vinylsulfonic acid and (meth)allylsulfonic acid; aromatic sulfonic acids such as styrenesulfonic acid and $\alpha$-methylstyrenesulfonic acid; $C_{1-10}$ alkyl (meth)allylsulfosuccinic acid esters; sulfo-$C_{2-6}$ alkyl (meth)acrylates such as sulfopropyl (meth)acrylate; and sulfonic acid group-bearing unsaturated esters such as methyl vinyl sulfonate, 2-hydroxy-3-(meth)acryloxypropylsulfonic acid, 2-(meth)acryloylamino-2,2-dimethylethanesulfonic acid, 3-(meth)acryloyloxyethanesulfonic acid, 3-(meth)acryloyloxy-2-hydroxypropanesulfonic acid, 2-(meth)acrylamido-2-methylpropanesulfonic acid and 3-(meth)acrylamido-2-hydroxypropanesulfonic acid; and salts thereof.

Examples of sulfuric acid ester monomers include the sulfuric acid esters of (meth)acryloyl polyoxyalkylenes (degree of polymerization, 2 to 15) such as the sulfuric acid ester of polyoxypropylene monomethacrylate, and salts thereof.

Examples of phenolic hydroxyl group-bearing monomers include hydroxystyrene, bisphenol A monoallyl ether, bisphenol A mono(meth)acrylate ester, and salts thereof.

Examples of phosphoric acid monomers include (meth)acrylic acid hydroxyalkyl phosphoric acid monoesters such as 2-hydroxyethyl (meth)acryloyl phosphate and phenyl-2-acryloyloxy ethyl phosphate; and vinylphosphoric acid.

Examples of the salts in this case include alkali metal salts such as sodium salts and potassium salts, amine salts such as triethanolamine, and quaternary ammonium salts such as tetra-$C_{4-18}$ alkylammonium salts.

Exemplary monomers having a cationic functional group include primary amino group-bearing monomers, secondary amino group-bearing monomers, tertiary amino group-bearing monomers, quaternary ammonium salt group-bearing monomers, heterocycle-bearing monomers, phosphonium group-bearing monomers, sulfonium group-bearing monomers and sulfonic acid group-bearing polymerizable unsaturated monomers.

Examples of primary amino group-bearing monomers include $C_{3-6}$ alkenylamines such as (meth)allylamine and crotylamine; amino $C_{2-6}$ alkyl (meth)acrylates such as aminoethyl (meth)acrylate; monomers having an aromatic ring and a primary amino group, such as vinylaniline and p-aminostyrene; and ethylenediamine and polyalkylene polyamines. Examples of secondary amino group-bearing monomers include $C_{1-6}$ alkylamino $C_{2-6}$ alkyl (meth)acrylates such as t-butylaminoethyl methacrylate and methylaminoethyl (meth)acrylate, $C_{6-12}$ dialkenylamines such as di(meth)allylamine, ethyleneimine and diallylamine.

Examples of tertiary amino group-bearing monomers include di($C_{1-4}$ alkylamino $C_{2-6}$ alkyl) (meth)acrylates such as N,N-dimethylaminoethyl (meth)acrylate, N,N-diethylaminoethyl (meth)acrylate, N,N-dimethylaminopropyl (meth) acrylate, N,N-diethylaminopropyl (meth)acrylate, N,N-dibutylaminoethyl (meth)acrylate, N-t-butylaminoethyl (meth)acrylate and N,N-dimethylaminobutyl (meth)acrylate; di($C_{1-4}$ alkylamino $C_{2-6}$ alkyl) (meth)acrylamides such as N,N-dimethylaminoethyl (meth)acrylamide and N,N-dimethylaminopropyl (meth)acrylamide; and monomers having an aromatic ring and a tertiary amino group, such as N,N-dimethylaminostyrene.

Exemplary quaternary ammonium salt group-bearing monomers include tertiary amines that have been quaternized using a quaternizing agent such as a $C_{1-12}$ alkyl chloride, a dialkyl sulfuric acid, a dialkyl carbonate or benzyl chloride. Specific examples include alkyl (meth)acrylate-type quaternary ammonium salts such as (2-((meth)acryloyloxy)ethyl) trimethylammonium chloride, (2-((meth)acryloyloxy)ethyl)trimethylammonium bromide, ((meth)acryloyloxy)ethyl)triethylammonium chloride, ((meth)acryloyloxy)ethyl)dimethylbenzylammonium chloride and ((meth)acryloyloxy)ethyl)methylmorpholinoammonium chloride; alkyl (meth)acrylamide-type quaternary ammonium salts such as ((meth)acryloylamino)ethyl)trimethylammonium chloride, (meth))acryloylamino)ethyl)trimethylammonium bromide, ((meth)acryloylamino)ethyl)triethylammonium chloride and ((meth)acryloylamino)ethyl)dimethylbenzylammonium chloride; and other quaternary ammonium salt group-bearing monomers such as dimethyldiallylammonium methyl sulfate, trimethylvinylphenylammonium chloride, tetrabutylammonium (meth)acrylate, trimethylbenzylammonium (meth)acrylate and 2-(methacryloyloxy)ethyltrimethylammonium dimethylphosphate.

Examples of heterocycle-bearing monomers include N-vinylcarbazole, N-vinylimidazole, N-vinyl-2,3-dimethylimidazoline N-methyl-2-vinylimidazoline, 2-vinylpyridine, 4-vinylpyridine, N-methylvinylpyridine and oxyethyl-1-methylenepyridine.

Phosphonium group-bearing monomers are exemplified by glycidyl tributylphosphone.

Examples of sulfonium group-bearing monomers include 2-acryloxyethyldimethyl sulfone and glycidyl methylsulfonium. Examples of sulfonic acid group-bearing polymerizable unsaturated monomers include (meth)acrylamidoalkanesulfonic acids such as 2-acrylamido-2-methylpropanesulfonic acid, and sulfoalkyl (meth)acrylates such as 2-sulfoethyl (meth) acrylate.

The above-mentioned cationic functional group-bearing monomers may be used in the form of inorganic acid salts such as hydrochlorides and phosphates, or in the form of organic salts such as formates and acetates.

The anionic functional group-bearing monomers and cationic functional group-bearing monomers mentioned above can be used singly or as a combination of two or more thereof.

The letter 'C' as used above in the description of the first organic monomer refers to the number of carbons.

The second organic monomer which is polymerizable with the first organic monomer having an ionic functional group may be a suitable monomer selected according to the polymerizable group on the first organic monomer. Illustrative examples include (i) styrene compounds such as styrene, o-methylstyrene, m-methylstyrene, p-methylstyrene, $\alpha$-methylstyrene, p-ethylstyrene, 2,4-dimethylstyrene, p-n-butylstyrene, p-t-butylstyrene, p-n-hexylstyrene, p-n-octylstyrene, p-n-nonylstyrene, p-n-decylstyrene, p-n-dodecylstyrene, p-methoxystyrene, p-phenylstyrene, p-chlorostyrene, and 3,4-dichlorostyrene; (meth)acrylic acid esters such as methyl acrylate, ethyl acrylate, n-butyl acrylate, isobutyl acrylate, propyl acrylate, hexyl acrylate, 2-ethylhexyl acrylate, n-octyl acrylate, dodecyl acrylate, lauryl acrylate, stearyl acrylate, 2-chloroethyl acrylate, phenyl acrylate, methyl $\alpha$-chloroacrylate, methyl methacrylate, ethyl methacrylate, n-butyl methacrylate, isobutyl methacrylate, propyl methacrylate, hexyl methacrylate, 2-ethylhexyl methacrylate, n-octyl methacrylate, dodecyl methacrylate, lauryl methacrylate and stearyl methacrylate; (iii) vinyl esters such as vinyl acetate, vinyl propionate, vinyl benzoate and vinyl butyrate; (iv) (meth)acrylic acid derivatives such as acrylonitrile and methacrylonitrile; (v) vinyl ethers such as vinyl methyl ether, vinyl ethyl ether and vinyl isobutyl ether; (vi) vinyl ketones such as vinyl methyl ketone, vinyl hexyl ketone and methyl isopropenyl ketone; (vii) N-vinyl compounds such as N-vinylpyrrole, N-vinylcarbazole, N-vinylindole and N-vinylpyrrolidone; and (viii) fluoroalkyl group-bearing (meth)acrylic acid esters such as vinyl fluoride, vinylidene fluoride, tetrafluoroethylene, hexafluoropropylene, trifluoroethyl acrylate, and tetrafluoropropyl acrylate.

Depending on the polymerizable group in the first organic monomer, it is also possible to use monomers having a reactive functional group such as a hydroxyl group, amino group, epoxy group, thiol group, isocyanate group, oxazoline group or carbodiimide group.

These organic monomers may be used singly or as combinations of two or more thereof.

It is especially preferable to use, as the first organic monomer and the second organic monomer, a combination of at least one monomer selected from Group $\alpha$ below with at least one monomer selected from Group $\beta$ below.

(1) First Organic Monomer -- Group $\alpha$

Salts of styrenesulfonic acids, salts of styrenecarboxylic acids, salts of (meth)acrylic acid, salts of (meth)acrylate carboxylic acids, salts of (meth)acrylate sulfonic acids, salts of vinylsulfonic acids, salts of vinylcarboxylic acids, salts of (meth)acryl sulfonic acids, salts of (meth)acrylic carboxylic acids.

(2) Second Organic Monomer -- Group β

Styrene monomers, (meth)acrylic monomers.

No particular limitation is imposed on the ratio in which the above-described first organic monomer and the second organic monomer are used to produce the oval-spherical organic polymer particles of the invention. For example, the weight ratio of the first organic monomer to the second organic monomer may be set in a range of 1:99 to 99:1. To further increase the aspect ratio of the resulting particles and have the shape of the particles approach an ideal oval-spherical shape, the ratio of the first organic monomer to the second organic monomer is preferably from 5:95 to 50:50, and more preferably from 10:90 to 40:60.

To further increase the aspect ratio of the resulting particles and efficiently produce particles have an ideal oval-spherical shape, the combined content of the first organic monomer and the second organic monomer in the reaction solution (which combined content is referred to below as the "polymerization component content") is preferably from 1 to 80 wt%, more preferably from 5 to 50 wt%, and even more preferably from 10 to 30 wt%, of the entire reaction solution. At a polymerization component content of more than 80 wt%, the amount of these components becomes excessive, destroying the balance within the solution and readily leading to the formation of spherical particles. As a result, it is difficult to obtain monodispersed oval-spherical particles. On the other hand, at less than 1 wt%, although particles of the desired shape can be obtained, bringing the reaction to completion takes a long time, which is impractical.

The reaction temperature during polymerization varies with the type of solvent used, but generally is in a range of about -100 to 200°C, preferably 0 to 150°C, and more preferably 40 to 100°C.

The reaction time is not subject to any particular limitation, so long as it is a length of time sufficient to allow the particles to substantially completely assume oval-spherical shapes. However, the reaction time is largely affected by such factors as the types of monomers and the amounts in which they are included, the types of ionic functional groups, and the viscosity and concentration of the solution. To efficiently produce the target oval-spherical particles having an ideal shape, reaction at 40 to 100°C is typically carried out for about 2 to 24 hours, and preferably about 8 to 16 hours.

The solvent used in the polymerization reaction may be suitably selected from among various commonly employed solvents and used in accordance with the solubility and other characteristics of the polymerization components. Illustrative examples of suitable solvents include water; alcohols such as methanol, ethanol, 1-propanol, 2-propanol, 1-butanol, 2-butanol, isobutyl alcohol, t-butyl alcohol, 1-pentanol, 2-pentanol, 3-pentanol, 2-methyl-1-butanol, isopentyl alcohol, t-pentyl alcohol, 1-hexanol, 2-methyl-1-pentanol, 4-methyl-2-pentanol, 2-ethylbutanol, 1-heptanol, 2-heptanol, 3-heptanol, 2-octanol, 2-ethyl-1-hexanol, benzyl alcohol and cyclohexanol; ether alcohols such as methyl cellosolve, ethyl cellosolve, isopropyl cellosolve, butyl cellosolve and diethylene glycol monobutyl ether; ketones such as acetone, methyl ethyl ketone, methyl isobutyl ketone and cyclohexanone; esters such as ethyl acetate, butyl acetate, ethyl propionate and cellosolve acetate; aliphatic or aromatic hydrocarbons such as pentane, 2-methylbutane, n-hexane, cyclohexane, 2-methylpentane, 2,2-dimethylbutane, 2,3-dimethylbutane, heptane, n-octane, isooctane, 2,2,3-trimethylpentane, decane, nonane, cyclopentane, methylcyclopentane, methylcyclohexane, ethylcyclohexane, p-menthane, dicyclohexyl, benzene, toluene, xylene and ethylbenzene; halogenated hydrocarbons such as carbon tetrachloride, trichloroethylene, chlorobenzene and tetrabromoethane; ethers such as ethyl ether, dimethyl ether, trioxane and tetrahydrofuran; acetals such as methylal and diethylacetal; fatty acids such as formic acid, acetic acid and propionic acid; sulfur or nitrogen-bearing organic compounds, such as nitropropene, nitrobenzene, dimethylamine, monoethanolamine, pyridine, dimethylformamide, dimethylsulfoxide, N-methyl-2-pyrrolidone and acetonitrile; and ionic liquids. These solvents may be used singly or as mixtures of two or more thereof.

The ionic liquids are not subject to any particular limitation so long as they are ionic liquids which contain cations and anions. The cations are exemplified by the following ions: 1-ethyl-3-methylimidazolium, 1-butyl-3-methylimidazolium, 1,2,3-trimethylimidazolium, 1,2-dimethyl-3-ethylimidazolium, 1,2-dimethyl-3-propylimidazolium, 1-butyl-2,3-dimethylimidazolium, N-propylpyridinium, N-butylpyridinium, 1-butyl-4-methylpyridinium and 1-butyl-2,4-dimethylpyridinium. The anions are exemplified by $BF_4^-$, $PF_6^-$, $AsF_6^-$, $SbF_6^-$, $AlCl_4^-$, $HSO_4^-$, $ClO_4^-$, $CH_3SO_3^-$, $CF_3SO_3^-$, $CF_3CO_2^-$, $(CF_3SO_2)_2N^-$, $Cl^-$, $Br^-$ and $I^-$.

The use of water, a water-soluble organic solvent or a mixed solvent of water and a water-soluble organic solvent is especially preferred for easily dispersing or dissolving the above first and second monomers and for improving their copolymerizability. Illustrative examples of the water-soluble organic solvent include methanol, ethanol, 2-propanol, methyl cellosolve, ethyl cellosolve, acetone, tetrahydrofuran, dimethylformamide and N-methyl-2-pyrrolidone.

When the solvent is a mixed solvent of water and a water-soluble organic solvent, the mixing ratio therebetween, expressed as the weight ratio of water to the water-soluble organic solvent, is typically from 1:99 to 99:1, preferably from 10:90 to 70:30, and most preferably from 20:80 to 50:50.

Any of various known polymerization initiators may be used as the polymerization initiator for carrying out the radical polymerization reaction. Illustrative examples include various types of oil-soluble, water-soluble or ionic polymerization initiators, particularly peroxides such as benzoyl peroxide, cumene hydroperoxide, t-butyl hydroperoxide, sodium persulfate and ammonium persulfate; and azo compounds such as azobisisobutyronitrile, azobismethylbutyronitrile, azobisisovaleronitrile, 2,2'-azobis(2-amidinopropane) dihydrochloride, 2,2'-azobis(N,N'-dimethyleneisobutylamidine) dihydrochloride and disodium 2,2'-azobis-2-cyanopropane-1-sulfonate. These polymerization initiators may be used singly or as a mixture of two or more thereof.

In the production of the oval-spherical organic polymer particles, depending on the method of polymerization, additives such as (polymer) dispersants, stabilizers and emulsifying agents (surfactants) may be included in a suitable amount within a range of 0.01 to 50 wt%, based on the combined weight of the polymerization ingredients.

Examples of suitable dispersants and stabilizers include the following hydrophobic or hydrophilic dispersants and stabilizers: polystyrene derivatives such as polyhydroxystyrene, polystyrene sulfonic acid, vinylphenol-(meth)acrylate copolymers, styrene-(meth)acrylate copolymers and styrene-vinylphenol-(meth)acrylate copolymers; poly(meth)acrylic acid derivatives such as poly(meth)acrylic acid, poly(meth)acrylamide, polyacrylonitrile, poly(ethyl (meth)acrylate) and poly(butyl (meth)acrylate); polyvinyl alkyl ether derivatives such as polymethyl vinyl ether, polyethyl vinyl ether, polybutyl vinyl ether and polyisobutyl vinyl ether; cellulose derivatives such as cellulose, methyl cellulose, cellulose acetate, cellulose nitrate, hydroxymethyl cellulose, hydroxyethyl cellulose, hydroxypropyl cellulose and carboxymethyl cellulose; polyvinyl acetate derivatives such as polyvinyl alcohol, polyvinyl butyral, polyvinyl formal and polyvinyl acetate; nitrogen-bearing polymer derivatives such as polyvinyl pyridine, polyvinyl pyrrolidone, polyethyleneimine and poly(2-methyl-2-oxazoline); polyvinyl halide derivatives such as polyvinyl chloride and polyvinylidene chloride; and polysiloxane derivatives such as polydimethylsiloxane. These may be used singly or as combinations of two or more thereof.

Illustrative examples of emulsifying agents (surfactants) include anionic emulsifying agents such as alkyl sulfates (e.g., sodium laurylsulfate), alkylbenzene sulfonates (e.g., sodium dodecylbenzene sulfonate), alkylnaphthalene sulfonates, fatty acid salts, alkyl phosphates and alkyl sulfosuccinates; cationic emulsifying agents such as alkylamines, quaternary ammonium salts, alkyl betaine and amine oxides; and nonionic emulsifying agents such as polyoxyethylene alkyl ethers, polyoxyethylene alkyl ethers, polyoxyethylene alkylallyl ethers, polyoxyethylene alkylphenyl ethers, sorbitan fatty acid esters, glycerol fatty acid esters and polyoxyethylene fatty acid esters.

These may be used singly or as combinations of two or more thereof.

In the practice of the invention, when the polymerization reaction is carried out, depending on such considerations as the intended use of the resulting particles, a crosslinking agent may be included in a suitable amount of from 0.01 to 80 wt%, based on the combined weight of the polymerization components.

Illustrative examples of crosslinking agents include aromatic divinyl compounds such as divinylbenzene and divinylnaphthalene; and compounds such as ethylene glycol diacrylate, ethylene glycol dimethacrylate, triethylene glycol dimethacrylate, tetraethylene glycol dimethacrylate, 1,3-butylene glycol dimethacrylate, trimethylolpropane triacrylate, trimethylolpropane trimethacrylate, 1,4-butanediol diacrylate, neopentyl glycol diacrylate, 1,6-hexanediol diacrylate, pentaerythritol triacrylate, pentaerythritol tetraacrylate, pentaerythritol dimethacrylate, pentaerythritol tetramethacrylate, glycerol acryloxy dimethacrylate, N,N-divinyl aniline, divinyl ether, divinyl sulfide and divinyl sulfone. These may be used singly or as combinations of two or more thereof.

Depending on the intended use of the resulting particles, a catalyst (reaction promoter) may be included in the polymerization reaction. The amount of catalyst included may be a suitable amount that does not exert an adverse influence on the particle properties; for example, an amount of from 0.01 to 20 wt%, based on the combined weight of the polymerization components, may be included.

The catalyst is not subject to any particular limitation, provided it is a positive catalyst. Any suitable known catalyst may be selected and used. Specific examples include tertiary amines such as benzyldimethylamine, triethylamine, tributylamine, pyridine and triphenylamine; quaternary ammonium compounds such as triethylbenzylammonium chloride and tetramethylammonium chloride; phosphines such as triphenylphosphine and tricyclophosphine; phosphonium compounds such as benzyltrimethylphosphonium chloride; imidazole compounds such as 2-methylimidazole and 2-methyl-4-ethylimidazole; alkali metal hydroxides such as potassium hydroxide, sodium hydroxide and lithium hydroxide; alkali metal carbonates such as sodium carbonate and lithium carbonate; alkali metal salts of organic acids; and halides or complex salts thereof which exhibit Lewis acid properties, such as boron trichloride, boron trifluoride, tin tetrachloride and titanium tetrachloride. These may be used singly or as combinations of two or more thereof.

In addition, to adjust such characteristics as the size, shape and quality of the resulting oval particles, a compound that is capable of dissolving in water or another polar solvent, electrolytically dissociates into cations and anions, and the solution of which exhibits electrical conductivity may also be added at the time of the polymerization reaction.

Illustrative examples include salts, inorganic acids, inorganic bases, organic acids, organic bases and ionic liquids. The amount of addition may be set to a suitable amount which does not have an adverse influence on the particle properties, such as from 0.01 to 80 wt%, based on the combined weight of the polymerization components.

Because the above-described inventive method of production is solution polymerization, which is a method capable of controlling the particle size, characteristics such as the size and shape of the particles can be precisely designed. As a result, oval-spherical organic polymer particles which are covered with a single continuous and smooth curved surface that is free of fracture planes (or boundary lines) and which have the desired aspect ratio can be obtained. Using this production method, other organic compounds, for example, can be directly bonded to the resulting oval-spherical organic polymer particles, enabling particles having a core/shell structure to be continuously and efficiently obtained.

When the inventive method of production is carried out, all of the particles obtained are not organic polymer particles having the target oval-spherical shape. Generally, of a random sampling of 100 of the oval-spherical organic polymer particles obtained, the aspect ratio $P_1$ of individual particles calculated from the major axis $L_1$ and minor axis $D_1$ ($P_1 = L_1/D_1$) of the projected two-dimensional image obtained by shining light onto that particle from a direction orthogonal to the long axis of the particle, averaged for the 100 particles ($P_{1a}$), satisfies the relationship $P_{1a} \geq 1.5$. For practical purposes, it is preferable for $P_{1a} \geq 1.8$, more preferable for $2.0 \leq P_{1a} \leq 20$, even more preferable for $2.2 \leq P_{1a} \leq 15$ and most preferable for $2.5 \leq P_{1a} \leq 12$.

The degree of variation A (%) = [(standard deviation of $P_1$)/$P_{1a}$] x 100 in the aspect ratios $P_1$ of 100 individual particles that have been randomly sampled in the same way generally satisfies the relationship $A \leq 50$. For practical purposes, this degree of variation in the aspect ratio A is preferably $\leq 30$, and more preferably $\leq 20$.

These oval-spherical organic polymer particles preferably have a shape, as seen from the long axis direction, which is close to circular. One method for determining whether the shape is close to circular involves measurement from the projected two-dimensional image obtained by shining light from, for example, the long axis direction of the particle. In this case, the aspect ratio $P_2$ calculated from the major axis $L_2$ and minor axis $D_2$ in the projected two-dimensional image obtained by shining a light from the long axis direction of the particle preferably satisfies the relationship $1.2 \geq P_2 \geq 1.0$.

If such a determination from the projected two-dimensional image obtained by shining light from the long axis direction is difficult, measurement can be carried out by the following method.
Using the above aspect ratio $P_1$ and the aspect ratio $P_{1\text{-}45.}$ calculated from the major axis $L_1$ and minor axis $D_{1\text{-}45.}$ of the projected two-dimensional image obtained by placing an oval-spherical organic polymer particle on a reference plane containing a horizontal axis as an axis of rotation so that the long axis of the particle is aligned with the axis of rotation, and rotating the reference plane 45° about the axis of rotation, the index of spheroidization $Q_1$ for the projected two-dimensional image that it is assumed will be obtained by shining light from the long axis direction is computed as follows.

$$\texttt{(1) If } P_{1\text{-}45.} \leq P_1, \texttt{ then } Q_1 = P_{1\text{-}45.}/P_1.$$

$$\texttt{(2) If } P_1 < P_{1\text{-}45.}, \texttt{ then } Q_1 = P_1/P_{1\text{-}45.}.$$

The cross section obtained by cutting the oval-spherical particle orthogonal to the long axis direction becomes more nearly circular the closer this index of spheroidization is to 1, signifying that, three dimensionally, the particle is of an oval-spherical shape.
The oval-spherical organic polymer particle of the invention has an average index of spheroidization $Q_{1a}$ which generally satisfies the relationship $0.7 \leq Q_{1a} \leq 1.0$, preferably satisfies the relationship $0.8 \leq Q_{1a} \leq 1.0$, more preferably satisfies the relationship $0.9 \leq Q_{1a} \leq 1.0$, and most preferably satisfies the relationship $0.95 \leq Q_{1a} \leq 1.0$.

In the practice of the invention, the operation of rendering the oval-spherical particles obtained into a two-dimensional state (generally the oval-spherical particle maintains a state in which the long axis is horizontally oriented ) by using a scanning electron microscope (S-4800 manufactured by Hitachi High-Technologies Corporation; referred to below as "SEM") to take a photograph at a measurable magnification (from 300 to 20,000x), measuring the major axis $L_1$ and minor axis $D_1$ of each particle in this state and calculating the aspect ratio $P_1$ and the operation of likewise, from the above state, setting an oval-spherical organic polymer particle on a microscope stage having an axis provided in the horizontal direction as an axis of rotation so that the long axis of the oval-spherical organic polymer particle is aligned with the axis of rotation, rotating the reference plane (in this case, the microscope stage) 45° about the axis of rotation, using the SEM to measure the major axis $L_1$ and minor axis $D_{1\text{-}45.}$ and calculating the aspect ratio $P_{1\text{-}45.}$ are randomly carried out n = 100 times, based on which the average aspect ratio $P_{1a}$, degree of variation A, and average index of spheroidization $Q_{1a}$ are calculated.

Other fine particles may be physically or chemically added to the oval-spherical organic polymer particles of the invention to form composite particles.
Examples of methods by which this may be done include (1) incorporating the fine particles at the time of particle production, (2) using the polarity of the ionic functional groups present at the surface of the particles following production to add the fine particles, and (3) addition by chemical bonding, such as addition polymerization, polycondensation or addition condensation.

As used herein, "other fine particles" refers to organic or inorganic particles which are smaller than the oval-spherical organic polymer particles serving as the parent particles. The preferred particle diameter varies with the size of the oval-spherical organic polymer particles, but is generally in a range of about 0.01 to 1,000 $\mu$m.

Organic particles are exemplified by particles composed of the polymerizable monomers used to produce the inventive particles, curable particles, and organic pigments.

Illustrative examples of inorganic particles include those made of metals, metal oxides, hydrated metal oxides and inorganic pigments, such as copper powder, iron powder, gold powder, aluminum oxide, titanium oxide, zinc oxide, silicon oxide, tin oxide, copper oxide, iron oxide, magnesium oxide, manganese oxide, calcium carbonate, magnesium hydroxide and aluminum hydroxide.

These fine particles may be a commercial product which is either used without modification or which is used after first being surface modified with a coupling agent or other surface treatment agent.

In particular, when the oval-spherical organic polymer particles of the invention are used for optical applications, to control the refractive index and enhance the light diffusion properties, it is advantageous to add fine particles of a metal oxide, preferably titanium oxide, zinc oxide or silicon oxide, having a particle diameter of 0.01 to 500 $\mu$m. The fine particles used may be of a single type or may be a combination of two or more types.

The addition of these metal oxide fine particles can be effected, during production of the inventive particles, by carrying out the reaction while including 0.1 to 50 wt% of the fine particles based on the total amount of polymerization components, or by inducing the uptake, such as by physical or chemical adsorption, of these fine particles into the resulting oval-spherical organic polymer particles.

EXAMPLES

Examples of the invention and Comparative Examples are given below by way of illustration and not by way of limitation.

Example 1

The compounds shown below were mixed in the indicated proportions and the resulting mixture was added all at once to a 300 ml flask. Dissolved oxygen in the mixture was displaced with nitrogen, following which the flask contents were heated at an oil bath temperature of 65°C for about 15 hours under stirring and a stream of nitrogen to give a styrene-sodium p-styrenesulfonate copolymer particle solution.

| | |
|---|---|
| Styrene | 28.9 g |
| Sodium p-styrenesulfonate | 7.2 g |
| Methanol | 82.8 g |
| Water | 55.2 g |
| Azobisisobutyronitrile (AIBN) | 1.0 g |
| Polyvinyl pyrrolidone (K-30) | 15.0 g |

Next, this particle solution was repeatedly washed and filtered three to five times with a water-methanol mixed solution (weight ratio, 3:7) using a known suction filtration apparatus, then vacuum dried, yielding oval-spherical organic polymer particles.

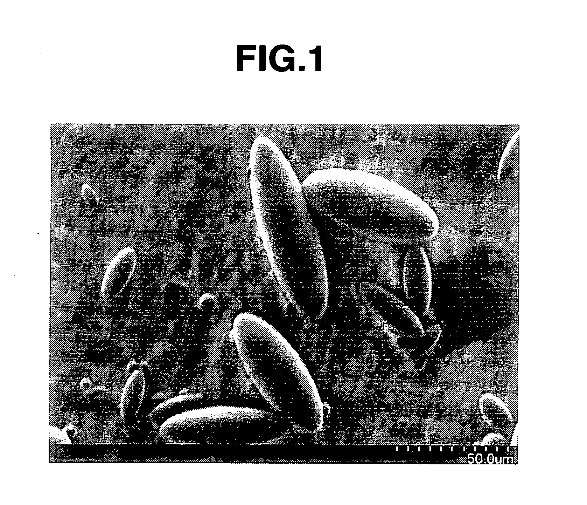

One hundred of the resulting particles were randomly sampled and their shapes examined under a scanning electron microscope, from which it was confirmed that they were oval-spherical organic polymer particles having a major axis $L_1$ with an average value of 45 $\mu$m and a single continuous curved surface. The aspect ratio $P_1$ had an average value $P_{1a}$ of 2.9 and a degree of variation A of 19.6. The average index of spheroidization $Q_{1a}$ was 0.98. FIG. 1 shows a scanning electron micrograph of the oval-spherical organic polymer particles thus obtained.

Example 2

A mixture in the below-indicated proportions was added all at once to a 300 ml flask. Dissolved oxygen in the mixture was displaced with nitrogen, following which the contents were heated at an oil bath temperature of 65°C for about 15 hours under stirring and a stream of nitrogen to give a styrene-sodium p-styrenesulfonate copolymer particle solution.

| Styrene | 28.9 g |
| Sodium p-styrenesulfonate | 7.2 g |
| Methanol | 82.8 g |
| Water | 55.2 g |
| Azobisisobutyronitrile (AIBN) | 1.0 g |
| Polyvinyl pyrrolidone (K-90) | 15.0 g |

The particle solution was washed, filtered and dried in the same way as in Example 1. Next, 100 of the resulting particles were randomly sampled and their shapes examined under a scanning electron microscope, from which it was confirmed that they were oval-spherical organic polymer particles having a major axis with an average value $L_1$ of 15 $\mu$m and a single continuous curved surface. The aspect ratio $P_1$ had an average value $P_{1a}$ of 3.2 and a degree of variation A of 15.1. The average index of spheroidization $Q_{1a}$ was 0.95.

Example 3

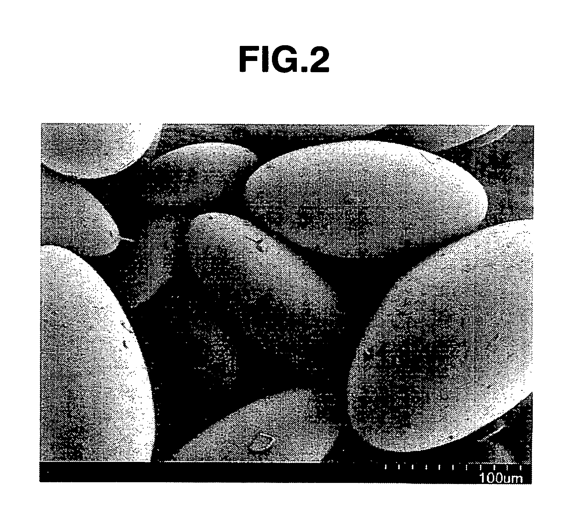

Aside from using sodium methacryloyloxyethylsulfonate instead of sodium p-styrenesulfonate, a styrene-sodium methacryloyloxyethylsulfonate copolymer particle solution was obtained in the same way as in Example 1. The particle solution was washed, filtered and dried in the same way as in Example 1. Next, 100 of the resulting particles were randomly sampled and their shapes examined under a scanning electron microscope, from which it was confirmed that they were oval-spherical organic polymer particles having a major axis $L_1$ with an average value of 125 $\mu$m and a single continuous curved surface. The aspect ratio $P_1$ had an average value $P_{1a}$ of 2.3 and a degree of variation A of 14.7. The average index of spheroidization $Q_{1a}$ was 0.97. FIG. 2 shows a scanning electron micrograph of the oval-spherical organic polymer particles thus obtained.

Example 4

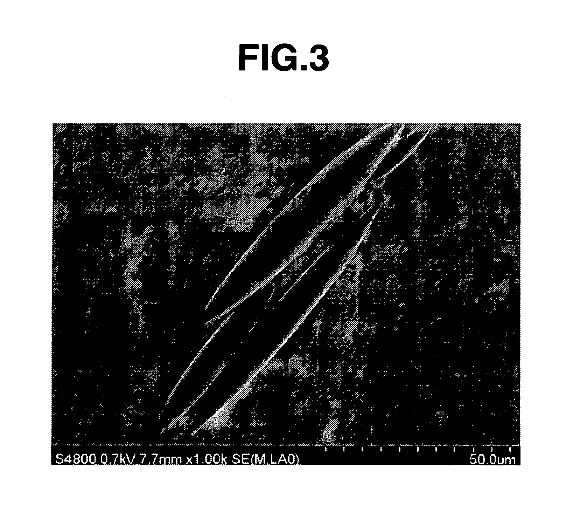

Aside from using ethanol instead of methanol, a styrene-sodium p-styrenesulfonate copolymer particle solution was obtained in the same way as in Example 1. The particle solution was washed, filtered and dried in the same way as in Example 1. Next, 100 of the resulting particles were randomly sampled and their shapes examined under a scanning electron microscope, from which it was confirmed that they were oval-spherical organic polymer particles having a major axis $L_1$ with an average value of 84 $\mu$m and a single continuous curved surface. The aspect ratio $P_1$ had an average value $P_{1a}$ of 10.5 and a degree of variation A of 9.6. The average index of spheroidization $Q_{1a}$ was 0.98. FIG. 3 shows a scanning electron micrograph of the oval-spherical organic polymer particles thus obtained.

Example 5

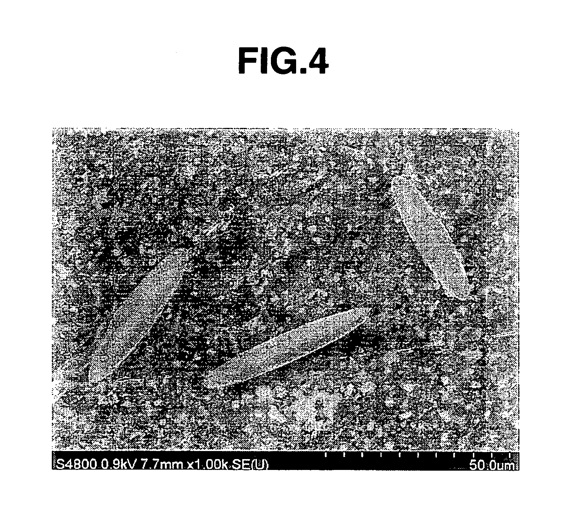

Aside from adding 1.8 g of sodium chloride, a styrene-sodium p-styrenesulfonate copolymer particle solution was obtained in the same way as in Example 1. The particle solution was washed, filtered and dried in the same way as in Example 1. Next, 100 of the resulting particles were randomly sampled and their shapes examined under a scanning electron microscope, from which it was confirmed that they were oval-spherical organic polymer particles having a major axis $L_1$ with an average value of 46 $\mu$m and a single continuous curved surface. The aspect ratio $P_1$ had an average value $P_{1a}$ of 4.9 and a degree of variation A of 15.8. The average index of spheroidization $Q_{1a}$ was 0.97. FIG. 4 shows a scanning electron micrograph of the oval-spherical organic polymer particles thus obtained.

Comparative Example 1

The compounds shown below were mixed in the indicated proportions and the resulting mixture was added all at once to a 300 ml flask. Dissolved oxygen in the mixture was displaced with nitrogen, following which the flask contents were heated at an oil bath temperature of 65°C for about 15 hours under stirring and a stream of nitrogen to give a styrene/n-butyl acrylate copolymer particle solution.

| Styrene | 41.3 g |
| n-Butyl acrylate | 10.3 g |

(continued)

| | |
|---|---|
| Methanol | 138.0 g |
| Azobisisobutyronitrile (AIBN) | 2.4 g |
| Polyvinyl pyrrolidone (K-30) | 9.0 g |

The particle solution was washed, filtered and dried in the same way as described above. Next, 100 of the resulting particles were randomly sampled and their shapes examined under a scanning electron microscope, from which it was confirmed that they were spherical particles having an average particle diameter of 7.2 $\mu$m. Oval-spherical particles with a high aspect ratio were not obtained.

Comparative Example 2

Aside from using p-methylstyrene instead of sodium p-styrenesulfonate, a styrene-p-methylstyrene copolymer solution was obtained in the same way as in Example 1. However, the solution viscosity was high and resinification occurred, making it impossible to obtain particles.

Comparative Example 3

Aside from using the same amount of methanol instead of water, a styrene-p-methylstyrene copolymer particle solution was prepared in the same way as in Comparative Example 2. After washing and drying, 100 of the resulting particles were randomly sampled and their shapes examined under a scanning electron microscope, from which it was confirmed that they were spherical particles having an average particle diameter of 2.3 $\mu$m. Oval-spherical particles with a high aspect ratio were not obtained.

Comparative Example 4

Aside from using the same amount of ethanol instead of water and changing the oil bath temperature to 78°C, a styrene/p-methylstyrene copolymer particle solution was prepared in the same way as in Comparative Example 2. After washing and drying, 100 of the resulting particles were randomly sampled and their shapes examined under a scanning electron microscope, from which it was confirmed that they were spherical particles having an average particle diameter of 13.9 $\mu$m. Oval-spherical particles with a high aspect ratio were not obtained.

The above examples of the invention and comparative examples are summarized in Table 1.

Table 1

| | Ionic functional groups | Oval-spherical shape | Average aspect ratio $P_{1a}$ | Degree of variation A (%) | Average index of spheroidization $Q_{1a}$ |
|---|---|---|---|---|---|
| Example 1 | yes | good | 2.9 | 19.6 | 0.98 |
| Example 2 | yes | good | 3.2 | 15.1 | 0.95 |
| Example 3 | yes | good | 2.3 | 14.7 | 0.97 |
| Example 4 | yes | good | 10.5 | 9.6 | 0.98 |
| Example 5 | yes | good | 4.9 | 15.8 | 0.97 |
| Comparative Example 1 | no | NG | < 1.1 | < 1.0 | 0.99 |
| Comparative Example 2 | no | NG | -- | -- | -- |
| Comparative Example 3 | no | NG | < 1.1 | < 1.0 | 0.98 |

(continued)

|  | Ionic functional groups | Oval-spherical shape | Average aspect ratio $P_{1a}$ | Degree of variation A (%) | Average index of spheroidization $Q_{1a}$ |
|---|---|---|---|---|---|
| Comparative Example 4 | no | NG | < 1.1 | < 1.0 | 0.97 |

| Good: Oval-spherical particles having a single continuous curved surface were obtained.<br>NG: Oval-spherical particles having a single continuous curved surface were not obtained.<br>--: Not measurable |
|---|

Sectioned planes of the oval-spherical organic polymer particles obtained in the above examples of the invention were verified as follows.

Method of Verifying Sectioned Planes

An epoxy embedding resin (Quetol 812), a curing agent (MNA, DDSA) and an accelerator (DMP-30) (the embedding resin, curing agent and accelerator were all products of Nisshin-EM Corporation) were blended together with a small quantity of the particles obtained in Example 1 and thoroughly mixed, following which the mixture was charged into a plastic mold (silicone embedding plates) and cured at 80°C for 3 hours. The cured material was then removed from the mold, and a sample block was fabricated.

Next, the block was trimmed, then cut into thin-film specimens having a thickness of about 100 nm using an ultramicrotome (Leica Microsystems Japan). The thin-film specimens were dyed with ruthenium tetraoxide, completing the preparation of light-transmitting specimens.

The resulting light-transmitting samples were placed under a scanning transmission electron microscope (S-4800 STEM, manufactured by Hitachi High Technologies Corporation; 300 to 10,000x) and randomly cut particle cross-sections on the specimen were examined, from which the outside shapes of the particles were found to have a single continuous curved surface free of undesirable surface irregularities and boundary points. Most of the shapes were circular, substantially circular, or elliptical.

In Examples 2 to 5 of the invention, microscopic examination carried out in the same way showed that, here too, the outside shapes of the particles had a single continuous curved surface free of undesirable surface irregularities and boundary points. Most of shapes in these examples were circular, substantially circular, or elliptical.

As shown above, the polymer particles of Examples 1 to 5 produced using an organic monomer having an ionic functional group were oval-spherical particles having a single continuous curved surface, a high aspect ratio, and a small degree of variation.

By contrast, the polymer particles of Comparative Examples 1, 3 and 4 produced using an organic monomer without an ionic functional group were spherical particles. In these cases oval-spherical particles having a high aspect ratio were not obtained.

**Claims**

1. An oval-spherical organic polymer particle having a single continuous curved surface, which particle is **characterized by**:

   bearing an ionic functional group, and
   having an aspect ratio $P_1$, calculated by the formula $P_1 = L_1/D_1$, wherein $L_1$ is the major axis and $D_1$ is the minor axis of a projected two-dimensional image obtained by shining light onto the particle from a direction orthogonal to the long axis of the particle, that satisfies the relationship $P_1 \geq 1.8$.

2. The oval-spherical organic polymer particle of claim 1 which is **characterized in that** the major axis $L_1$ is from 0.001 to 10,000 $\mu$m.

3. The oval-spherical organic polymer particle of claim 1 or 2 which is **characterized in that** the ionic functional group is an anionic functional group.

4. The oval-spherical organic polymer particle of claim 1 or 2 which is **characterized in that** the ionic functional group is a salt having a counterion.

5. The oval-spherical organic polymer particle of claim 3 which is **characterized in that** the anionic functional group has a metal cation as a counterion.

6. A method of producing the oval-spherical organic polymer particle of claim 1 or 2, the method being **characterized by** solution polymerizing a first organic monomer having an ionic functional group and a polymerizable group with a second organic monomer which is polymerizable with the first organic monomer.

7. The oval-spherical organic polymer particle producing method of claim 6 which is **characterized by** using a solution having a content of the first and second organic monomers combined of 1 to 80 wt%.

8. The oval-spherical organic polymer particle producing method of claim 6 or 7 which is **characterized by** carrying out dispersion polymerization in a solution that also contains a dispersant.

# FIG.1

# FIG.2

100um

# FIG.3

S4800 0.7kV 7.7mm x1.00k SE(M,LA0)          50.0um

# FIG.4

S4800 0.9kV 7.7mm x1.00k SE(U)　　　　50.0um

## INTERNATIONAL SEARCH REPORT

| | International application No. |
|---|---|
| | PCT/JP2005/003447 |

| A. CLASSIFICATION OF SUBJECT MATTER |
|---|
| Int.Cl⁷ C08F2/08, C08J3/12 |

According to International Patent Classification (IPC) or to both national classification and IPC

| B. FIELDS SEARCHED |
|---|
| Minimum documentation searched (classification system followed by classification symbols)<br>Int.Cl⁷ C08F2/00-2/60, C08J3/12-3/16 |

Documentation searched other than minimum documentation to the extent that such documents are included in the fields searched

Electronic data base consulted during the international search (name of data base and, where practicable, search terms used)
WPI/L

| C. DOCUMENTS CONSIDERED TO BE RELEVANT | | |
|---|---|---|
| Category* | Citation of document, with indication, where appropriate, of the relevant passages | Relevant to claim No. |
| X | JP 2-191604 A (Nippon Shokubai Kagaku Kogyo Co., Ltd.),<br>27 July, 1990 (27.07.90),<br>Claims; page 2, lower right column, 7th line from the bottom to page 3, lower right column, 3rd line from the bottom; page 5, lower left column, 3rd line from the bottom to lower right column, line 11; example 9; Fig. 2<br>& EP 349240 B         & US 4973632 A<br>& US 5026800 A         & US 5244735 A | 1-7 |
| X | JP 2002-302521 A (Hymo Corp.),<br>18 October, 2002 (18.10.02),<br>Claims<br>(Family: none) | 1-8 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>30 March, 2005 (30.03.05) | Date of mailing of the international search report<br>12 April, 2005 (12.04.05) |
|---|---|
| Name and mailing address of the ISA/<br>Japanese Patent Office | Authorized officer |
| Facsimile No. | Telephone No. |

Form PCT/ISA/210 (second sheet) (January 2004)

**EP 1 721 911 A1**

## INTERNATIONAL SEARCH REPORT

| International application No. |
|---|
| PCT/JP2005/003447 |

**C (Continuation).   DOCUMENTS CONSIDERED TO BE RELEVANT**

| Category* | Citation of document, with indication, where appropriate, of the relevant passages | Relevant to claim No. |
|---|---|---|
| X | JP 6-214422 A  (Ricoh Co., Ltd.),<br>05 August, 1994 (05.08.94),<br>Claims; Par. No. [0039]; examples 1 to 4<br>& US 5541031 A | 1-8 |
| X | JP 6-199957 A  (Ricoh Co., Ltd.),<br>19 July, 1994 (19.07.94),<br>Claims; Par. Nos. [0038] to [0049];<br>examples 2, 4, 5<br>(Family: none) | 1-4,6-8 |
| A | WO 01/70826 A  (Sekisui Plastics Co., Ltd.),<br>27 September, 2001 (27.09.01),<br>Claims<br>& EP 1266908 A            & US 6794448 B | 1-8 |
| A | JP 2000-302804 A  (Tomoegawa Paper Co., Ltd.),<br>31 October, 2000 (31.10.00),<br>Claims<br>(Family: none) | 1-8 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6053805 B
- JP 5317688 A
- JP 2000038455 A
- JP 8202074 A

- JP 2014222 A
- JP 2865534 B
- JP 2000039506 A
- WO 01070826 A